(19)

**Europäisches Patentamt**
**European Patent Office**
**Office européen des brevets**

(11) **EP 4 151 994 B1**

(12) **EUROPÄISCHE PATENTSCHRIFT**

(45) Veröffentlichungstag und Bekanntmachung des Hinweises auf die Patenterteilung:
**20.05.2026 Patentblatt 2026/21**

(21) Anmeldenummer: **21198116.2**

(22) Anmeldetag: **21.09.2021**

(51) Internationale Patentklassifikation (IPC):
**G01N 27/80** (2006.01)   **G01N 3/08** (2006.01)

(52) Gemeinsame Patentklassifikation (CPC):
**G01N 27/80; G01N 3/066; G01N 3/08;**
G01N 2203/0073; G01N 2203/0635

(54) **MESSVORRICHTUNG UND VERFAHREN ZUM ERFASSEN EINER MAGNETISCHEN EIGENSCHAFT EINER MECHANISCH BELASTETEN PROBE**

MEASURING DEVICE AND METHOD FOR DETECTING A MAGNETIC PROPERTY OF A MECHANICALLY LOADED SPECIMEN

DISPOSITIF DE MESURE ET PROCÉDÉ DE DÉTERMINATION D'UNE PROPRIÉTÉ MAGNÉTIQUE D'UN ÉCHANTILLON CHARGÉ MÉCANIQUEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.03.2023 Patentblatt 2023/12**

(73) Patentinhaber: **Fraunhofer-Gesellschaft zur Förderung der angewandten Forschung e.V. 80686 München (DE)**

(72) Erfinder:
• **BLUG, Andreas, Dr.**
  **79110 Freiburg (DE)**
• **Gennadii, Laskin, Dr.**
  **79110 Freiburg (DE)**
• **KOSS, Peter, Dr.**
  **79110 Freiburg (DE)**
• **DURMAZ RIZA, Ali**
  **79110 Freiburg (DE)**
• **STRAUB, Thomas, Dr.**
  **79110 Freiburg (DE)**
• **THOMAS, Akhil**
  **79110 Freiburg (DE)**

(74) Vertreter: **WSL Patentanwälte Partnerschaft mbB Kaiser-Friedrich-Ring 98 65185 Wiesbaden (DE)**

(56) Entgegenhaltungen:
CN-A- 108 267 366    JP-A- 2008 268 175
KR-A- 20110 120 531

• HOSSEIN VATANDOOST ET AL: "A novel phenomenological model for dynamic behavior of magnetorheological elastomers in tension-compression mode", SMART MATERIALS AND STRUCTURES, IOP PUBLISHING LTD., BRISTOL, GB, vol. 26, no. 6, 2 May 2017 (2017-05-02), pages 65011, XP020316746, ISSN: 0964-1726, [retrieved on 20170502], DOI: 10.1088/1361-665X/AA6126

**Beschreibung**

Die vorliegende Erfindung betrifft eine Messvorrichtung zum Erfassen einer magnetischen Eigenschaft einer mechanisch belasteten Probe mit einem Probenhalter, wobei der Probenhalter ein erstes Halteelement und ein zweites Halteelement aufweist, wobei das erste und das zweite Halteelement derart ausgestaltet und voneinander beabstandet angeordnet sind, dass die Probe an dem ersten und dem zweiten Halteelement aufnehmbar ist, sodass sich die Probe zwischen dem ersten und dem zweiten Halteelement erstreckt, eine mechanisch zumindest mit dem ersten oder dem zweiten Halteelement verbundenen Verstelleinheit, wobei die Verstelleinheit derart ausgestaltet und angeordnet ist, dass sie in einem Betrieb der Messvorrichtung eine Zugkraft oder eine Druckkraft auf zumindest das erste oder das zweite Halteelement ausübt, einem Kraftsensor, wobei der Kraftsensor derart ausgestaltet ist, dass in dem Betrieb der Messvorrichtung mit dem Kraftsensor eine von der Verstelleinheit auf die Probe ausgeübte Kraft erfassbar ist und einem Magnetometer.

Darüber hinaus betrifft die vorliegende Erfindung ein Verfahren zum Erfassen einer magnetischen Eigenschaft einer mechanisch belasteten Probe mit einer derartigen Messvorrichtung, wobei das Verfahren die Schritte aufweist:

A) Aufnehmen der Probe an den ersten und zweiten Halteelementen der Messvorrichtung,
B) Erfassen der magnetischen Flussdichte in der Umgebung der Probe mit dem Magnetometer,
C) mechanisches Belasten der Probe durch Ausüben einer Zugkraft oder einer Schubkraft mit der Verstelleinrichtung auf die Probe und
D) Bestimmen einer Änderung der magnetischen Flussdichte in der Umgebung der Probe vor und zumindest während oder nach dem mechanischen Belasten der Probe in Schritt C) als Maß für eine Ermüdung eines Materials der Probe.

Die Ermüdung eines Werkstoffs durch mechanische Belastung, insbesondere durch Zug und/oder Druck, geht einher mit Veränderungen in der internen Defektstruktur des Werkstoffs. Beispielsweise erhöht sich die Defektdichte im Verlauf der Lebensdauer eines Werkstoffs durch Interaktion von zunächst vereinzelten Defekten oder durch das lokale Versagen von Bindungen in dem Werkstoff. Risse nukleieren in Bereichen mit hoher Defektdichte oder in Bereichen mit einem großen Gradienten in einer Eigenschaft des Werkstoffs. Solche Keime von Rissen wachsen während des fortschreitenden Ermüdungsprozesses zu Mikro-, Kurz- und schließlich zu Langrissen an. Da an Defekten in der Elektronenstruktur von Werkstoffen häufig ungepaarte Spins auftreten, können diese anhand des magnetischen Moments bzw. anhand von Wechselwirkungen des magnetischen Moments mit den magnetischen Domänen bzw. Domänengrenzen in ferro- oder ferrimagnetischen Werkstoffen gemessen und charakterisiert werden. Für eine solche Charakterisierung kommen sowohl Messverfahren mit Magnetometern als auch Elektronenspinresonanz-Verfahren zum Einsatz.

Dabei werden mit den heute bekannten Messvorrichtungen und Verfahren immer makroskopische zu prüfende Volumina der Proben vermessen. Die eigentliche Messung erfolgt auf die typischerweise untersuchten Probenvolumina nur punktuell. Dies hat den Nachteil, dass Schädigungseffekte im Probeninneren nicht oder nicht vollständig erfasst werden können. Weiterhin ist das Signal-Rausch-Verhältnis aufgrund großen zu prüfenden Volumens prinzipiell begrenzt. Letztlich führen die großen zu prüfende Volumina dazu, dass nicht alle anderen Methoden der, insbesondere zerstörungsfreien, Materialprüfung auf eine auch auf ihre magnetischen Eigenschaften hin untersuchte Probe angewandt werden können.

Die JP 2008 268175 A offenbart einen magnetostriktiven Spannungssensor, der Spannungen genau und präzise erfassen kann. Dieser magnetostriktive Spannungssensor 11 umfasst ein Magnetelement 20 mit Magnetostriktion, einen Permanentmagneten 30 in der Nähe des Magnetelements und einen Magnetsensor 40 zum Erkennen eines magnetischen Leckflusses auf der in Bezug auf das magnetische Element gegenüberliegenden Seite des Permanentmagneten. Der magnetostriktive Spannungssensor erfasst die auf das Magnetelement wirkenden Spannungen, indem er die Schwankungen des magnetischen Leckflusses erfasst, der wiederum von den Spannungen abhängt, die bei Verwendung des Magnetsensors auf das Magnetelement wirken.

Aus dem Aufsatz von Hossein Vatandoost et al. "A novel phenomenological model for dynamic behavior of magnetorheological elastomers in tension-compression mode", Smart Materials and structures, IOP Publishing Ltd., Bristol, GB, Bd. 26, Nr. 6, 2. Mai 2017 (2017-05-02), Seite 65011, offenbart einen Versuchsaufbau, um MR-Elastomeren (MREs) in einem gekoppelten Zug-Druck-Modus zu testen und stellt ein phänomenologisches Modell vor, das das Spannungs-Dehnungs-Materialverhalten in Abhängigkeit von der Funktion der magnetischen Flussdichte, der Belastungsfrequenz und der Dehnung vorhersagt.

Demgegenüber ist es die Aufgabe der vorliegenden Erfindung eine Messvorrichtung und ein Verfahren bereitzustellen, welche es ermöglichen die magnetischen Eigenschaften einer Probe, die einer gezielten Materialermüdung unterliegt, auch dann zu untersuchen, wenn die Probe ein gegenüber dem Stand der Technik kleineres Probenvolumen aufweist.

Die zuvor genannte Aufgabe wird durch eine Messvorrichtung gelöst, so wie sie in dem beigefügten Anspruch 1 definiert ist. Dazu weist die Messvorrichtung der eingangs genannten Art weiterhin ein einen Probenraum definierendes Abschirmgehäuse auf, wobei das Abschirmgehäuse derart ausgestaltet ist, dass es eine magnetische Abschirmung des Probenraums gegenüber einem außerhalb des Probenraums vorhandenen magnetischen Feld bereitstellt, wobei das erste und das zweite Halteelement des Probenhalters innerhalb des Probenraums angeordnet sind, sodass die Probe innerhalb des Probenraums aufnehmbar ist, wobei der Kraftsensor derart außerhalb des Probenraums angeordnet ist, dass das Abschirmgehäuse ein in dem Betrieb der Messvorrichtung von dem Kraft-sensor ausgehendes magnetisches Feld abschirmt, und wobei das Magnetometer derart ausgestaltet und angeordnet ist, dass in dem Betrieb der Messvorrichtung mit dem Magnetometer eine magnetische Flussdichte in der Umgebung der Probe innerhalb des Probenraums erfassbar ist. Das Magnetometer ist erfindungsgemäß ein supraleitendes Quanteninterferometer oder ein optisch gepumptes Magnetometer. Ein Querschnitt des zu prüfenden Volumens der Probe beträgt 1 mm$^2$ oder weniger.

Die erfindungsgemäße Messvorrichtung, ermöglicht es kleine Probenvolumina zu vermessen. Dazu sind die Halteelemente des Probenhalters und damit in einem Betrieb der Messvorrichtung auch die Probe selbst innerhalb eines von einem Abschirmgehäuse definierten Probenraum angeordnet. Gleichzeitig ist auch das Magnetometer so angeordnet, dass mit ihm eine magnetische Flussdichte in der Umgebung der Probe innerhalb des Probenraums erfassbar ist. Demgegenüber wird der Kraftsensor außerhalb des Probenraums angeordnet, sodass sein Einfluss auf die Messung der magnetischen Flussdichte reduziert ist.

Die erfindungsgemäße Messvorrichtung ermöglicht die Verwendung eines für die Vermessung kleiner Probenvolumina erforderlichen Magnetometers mit hoher Sensitivität oder Empfindlichkeit, da die Störeinflüsse auf das Magnetometer und die Probe durch die Gestaltung der Messvorrichtung mit dem Abschirmgehäuse reduziert sind.

Kleine Probenvolumina lassen sich mit anderen zerstörungsfreien Verfahren untersuchen, ohne dass die Probe dazu verändert, beispielsweise geteilt oder zerschnitten, werden muss. Daher ermöglicht es die erfindungsgemäße Messvorrichtung Versuche mit Unterbrechungen zu fahren, wobei während den Unterbrechungen die Probe aus der erfindungsgemäßen Messvorrichtung ausgebaut und mit einem anderen zerstörungsfreien Verfahren ohne Veränderung der Probe vermessen wird. Nach dieser Unterbrechung kann die Messung mit der erfindungsgemäßen Messvorrichtung fortgesetzt werden.

Die Messvorrichtung ermöglicht ferner eine Vergleichbarkeit mit anderen Verfahren, da der Ermüdungszustand der Probe nach gängigen Methoden der Werkstoffwissenschaft, wie z.B. durch dehnungsgeregelte Messungen gemäß ASTM E 606 mithilfe der Messvorrichtung erzeugt werden kann.

Mit dem Magnetometer wird der zeitliche Verlauf der mittleren Magnetisierung

$$\vec{M}(t) = \int_V \vec{m}(\vec{x}, \bar{\bar{\sigma}}(\vec{x}, t), \bar{\bar{\varepsilon}}(\vec{x}, t), t) d\vec{x} \qquad (1)$$

der Probe mit einem Volumen V als Änderung der magnetischen Flussdichte

$$\vec{B}(t) = \mu_0(\vec{H}(t) + \vec{M}(t)) \qquad (2)$$

in der Umgebung der Probe gemessen. Dabei bezeichnet $\vec{m}$ das magnetische Moment an einem Ort $\vec{x}$ der Probe. Die magnetische Flussdichte $\vec{B}(t)$ hängt neben der Magnetisierung $\vec{M}(t)$ und der mechanischen Spannung $\bar{\bar{\sigma}}$ auch vom magnetischen Feld $\vec{H}(t)$ in der Umgebung ab. Zu diesem Umgebungsfeld trägt neben elektrischen Störungen aus der unmittelbaren Umgebung der Messvorrichtung auch das Erdmagnetfeld bei. Mit der erfindungsgemäßen Abschirmung werden diese Störungen soweit wie möglich reduziert.

Die Wechselwirkung von Defekten in dem Werkstoff (z.B. Versetzungen, Korngrenzen und Blochwänden) untereinander wirkt sich auf den räumlichen und zeitlichen Verlauf der lokalen Spannungs-und Dehnungstensoren aus. Insbesondere zeichnen sie sich durch irreversible energetische Anteile der Energiedichte

$$w = \int \bar{\bar{\sigma}} * d\bar{\bar{\varepsilon}} \qquad (3)$$

aus. Die irreversiblen Anteile äußern sich sowohl in der Hysterese des Spannungs-Dehnungsdiagramms als auch in der Hysterese der magnetomechanischen Kurven aus Magnetisierung M, mechanischer Spannung $\sigma$ und Dehnung $\varepsilon$. Da die Ermüdung von Werkstoffen ein langsamer Prozess ist - typisch sind $10^4$ Zyklen bei plastischer Verformung oder $10^6$ Zyklen bei makroskopisch-elastischer Verformung - ermöglicht es die vorliegende Erfindung, die geringen Änderungen der Magnetisierung innerhalb von einem oder wenigen Zyklen mit Hilfe von hochempfindlichen Magnetometern zu messen.

Die Miniaturisierung des Probenvolumens hat den Vorteil, dass das gesamte Probenvolumen von dem Magnetometer vollständig erfasst werden kann und somit auch Schädigungseffekte im Probeninneren erfasst werden. Zudem ist das Signal-Rausch-Verhältnis verbessert, da das Verhältnis zwischen einem magnetischen Signal einer einzelnen Schädigung, wie z.B. einem Riss, gegenüber dem Gesamtsignal des zu prüfenden Volumens der Probe erhöht ist. Ferner lassen sich kleine Proben und die darin enthaltenen Defekte und Defektstrukturen in dem Werkstoff mit einer größeren Auswahl an Verfahren der Materialprüfung und Materialcharakterisierung zusätzlich analysieren als dies bei großen Proben im Stand der Technik der Fall ist.

Die typischen aufgrund der Materialermüdung auftretenden Felder in den erfindungsgemäßen kleinen Proben sind um eine Größenordnung geringer als das Erdmagnetfeld und liegen typischerweise in der Größenordnung von nT. Daher gilt es äußere Streufelder, hierzu gehört auch das Erdmagnetfeld in der Größenordnung von 50 $\mu$T, durch eine geeignete magnetische Abschirmung mit dem Abschirmgehäuse unter das Niveau der zu erfassenden Felder der Probe zu drücken.

Als Material für das Abschirmgehäuse kommen gut leitfähige Metalle, insbesondere Bleche aus Metall in Frage. In einer Ausführungsform der Erfindung ist das Material des Abschirmgehäuses ein ferromagnetisches Material mit hoher Permeabilität und geringerer Remanenz, um auch Magnetfelder geringer Frequenz oder konstante Felder abzuschirmen. Dabei ist in einer Ausführungsform die Blechdicke geringer als die Skin-Tiefe, um Ströme auf der geschirmten Seite zu vermeiden.

In einer Ausführungsform der Erfindung umfasst das Abschirmgehäuse mindestens zwei Lagen aus einem elektrisch leitfähigen Material. In einer Ausführungsform der Erfindung ist die Gestaltung des Abschirmgehäuses an die Richtung, welche eine von dem Magnetometer zu messende magnetische Flussdichte hat, angepasst. In einer Ausführungsform der Erfindung umfasst das Abschirmgehäuse mindestens einen, vorzugsweise mehrere leitfähige, voneinander elektrisch isolierte Zylinder.

In einer Ausführungsform der Erfindung weist das Abschirmgehäuse einem Schirmfaktor von 1.000 oder mehr, vorzugsweise von 3.000 oder mehr und besonders bevorzugt von 8.000 oder mehr auf. In einer Ausführungsform der Erfindung beträgt Schirmfaktor 10.000 oder mehr. Als Schirmfaktor wird das Verhältnis zwischen einem magnetischen Feld an einem Ort in dem Probenraum ohne das Abschirmgehäuse geteilt durch die magnetische Flussdichte an dem gleichen Ort in dem Probenraum mit dem Abschirmgehäuse bezeichnet.

Um die von der Probe generierte magnetische Flussdichte in der Umgebung der Probe in dem Probenraum messen zu können, ist in einer Ausführungsform zumindest ein sensitiver Bereich des Magnetometers, vorzugsweise jedoch das vollständige Magnetometer bis auf seine erforderlichen Signalleitungen, in dem Probenraum angeordnet.

Grundsätzlich sind für das Messen der magnetischen Flussdichte in der Umgebung der Probe, alle Typen von Magnetometern mit hinreichender Empfindlichkeit geeignet.

In einer Ausführungsform der Erfindung wird ein Nullfeld-Magnetometer verwendet, welches eine hohe Empfindlichkeit senkrecht zu einer Oberfläche des Volumens der Probe aufweist und diese Komponente des B-Feldes mit großem Signal-Rausch-Abstand misst, um auch Änderungen, die innerhalb von wenigen Ermüdungszyklen auftreten, im B-Feld erkennen zu können. In einer Ausführungsform der Erfindung liegen der Rauschpegel des Magnetometers sowie die Störeinflüsse in einem Bereich von 1 pT oder weniger bei einer Messrate, welche die Umkehrpunkte des magnetischen Signals sicher auflöst.

Die Messrate des Magnetometers ist in einer Ausführungsform der Erfindung um eine Größenordnung größer als die Frequenz der zyklischen mechanischen Belastung mithilfe der Verstelleinheit.

Ein Beispiel für ein geeignetes Magnetometer ist ein supraleitendes Quanteninterferometer (SQUID; englisch: superconducting quantum interference device), wobei aufgrund der erforderlichen tiefen Temperaturen das Magnetfeld mit Pick-up-Spulen innerhalb des Probenraums aufgenommen und aus dem Probenraum und damit aus dem Abschirmgehäuse hinaus geleitet werden muss, da die supraleitenden Teile des SQUID nur bei tiefen Temperaturen mit dem erforderlichen raumfüllenden apparativen Aufwand betrieben werden können.

In einer Ausführungsform der Erfindung ist daher das Magnetometer ein bei Raumtemperatur betreibbares Magnetometer. Ein geeignetes Magnetometer ist ein optisch gepumptes Magnetometer (OPM; englisch: optically pumped magnetometer), insbesondere ein optisch gepumptes Nullfeld-Magnetometer. In einem optisch gepumpten Magnetometer werden gasförmige Atome als Magnetfeldsonden eingesetzt. Zu diesem Zweck wird der quantenmechanische Zustand der Atome mit Laserlicht präpariert ("gepumpt") und die Wirkung des zu messenden Magnetfelds auf diesen Zustand der verwendeten Atome wird mit Laserlicht ausgelesen. Bei der Präparation werden die Spins, der in einer Dampfzelle befindlichen Atome zu einer kohärenten Rotation angeregt. In dem zu messenden Magnetfeld präzedieren die Spins dann kollektiv mit der Lamorfrequenz, welche proportional zur magnetischen Flussdichte ist. Diese Wirkung auf den quantenmechanischen Spinzustand der Atome wird dann mittels laserspektroskopischer Methoden ausgelesen. Die Empfindlichkeit von OPMs ist ähnlich der von (SQUIDs). Als sensitives Medium in einem OPM dienen gasförmige Atome, beispielsweise Helium 4 ($^4$He) sowie verdampfte Alkalimetalle wie Kalium, Rubidium oder Cäsium. Daher sind keine tiefen, kyrogenen Temperaturen für den Betrieb erforderlich. OPMs sind mit kleinen Abmessungen realisierbar und sie sind daher vollständig in dem von dem Abschirmgehäuse definierten Probenraum unterzubringen.

Ähnlich hohe Sensitivitäten wie mit einem OPM können auch mit anderen bei Raumtemperatur zu betreibenden Magnetometern, so wie sie beispielsweise von der Firma TDK unter der Marke Nivio kommerziell erhältlich sind, bereitgestellt werden.

In einer Ausführungsform der Erfindung beträgt ein Abstand zwischen einem sensitiven Bereich des Magnetometers und einer Oberfläche eines zu prüfenden Volumens der Probe gleich der halben Länge des zu prüfenden Volumens der Probe in einer Richtung der Zugachse der Verstelleinheit oder ist größer. Auf diese Weise ist gewährleistet, dass mit dem Magnetometer die magnetische Flussdichte in der Umgebung der Probe integral über das zu prüfende Volumen der Probe gemessen wird und nicht nur punktuell, so wie dies bei den großen Proben aus dem Stand der Technik der Fall ist. Dabei ist der Abstand zwischen dem zu prüfenden Volumen und dem Magnetometer gemessen senkrecht zu der Zugachse. Die Zugachse der Messvorrichtung ist definiert als die Richtung der von der Verstelleinheit auf die Probe ausgeübten Zug- oder Druckkraft.

Dabei ist andererseits erstrebenswert, den sensitiven Bereich des Magnetometers so nah wie möglich an der Probe anzuordnen, so dass die von der Probe ausgehende Flussdichte in dem sensitiven Bereich möglichst groß ist. Daher ist in einer Ausführungsform der Erfindung der Abstand zwischen dem sensitiven Bereich des Magnetometers und der Oberfläche eines zu prüfenden Volumens der Probe gleich der halben Länge des zu prüfenden Volumens der Probe in der Richtung der Zugachse oder kleiner. In einer Ausführungsform der Erfindung liegt der Abstand zwischen dem sensitiven Bereich des Magnetometers und der Oberfläche eines zu prüfenden Volumens der Probe in einem Bereich von der halben Länge des zu prüfenden Volumens der Probe in der Richtung der Zugachse bis zu der ganzen Länge des zu prüfenden Volumens der Probe in der Richtung der Zugachse.

In einer Ausführungsform der Erfindung ist die Probe eine bearbeitete Probe mit einer Versuchslänge, d.h. einem Abschnitt, der das eigentliche zu prüfende Volumen der Probe bildet, und mit zwei Probenköpfen an gegenüberliegenden Enden der Versuchslänge. Dabei sind die Probenköpfe so bearbeitet, dass sie in dem ersten und dem zweiten Halteelement form- und/oder kraftschlüssig aufnehmbar sind. In einer Ausführungsform sind die Versuchsköpfe bearbeitet, sodass sie komplementär zu den Halteelementen ausgestaltet sind und an den Halteelementen zumindest formschlüssig oder kraftschlüssig aufnehmbar sind.

Versuchslänge und Probenköpfe bestehen in einer Ausführungsform einstückig aus dem Werkstoff der Probe. In einer Ausführungsform der Erfindung besteht die Probe aus einem leitfähigen, vorzugsweise einem metallischen und besonders bevorzugt aus einem ferromagnetischen Werkstoff.

In einer Ausführungsform der Erfindung ist in der Messvorrichtung eine Probe aufgenommen, wobei die Probe mit dem ersten Halteelement und dem zweiten Halteelement verbunden ist.

Dabei beträgt in einer Ausführungsform der Erfindung eine Länge eines zu prüfenden Volumens der Probe in der Richtung der Zugsachse der Verstelleinheit 5 mm oder weniger, vorzugsweise 4 mm oder weniger und besonders bevorzugt 3 mm oder weniger. In einer Ausführungsform der Erfindung hat dabei das zu prüfende Volumen eine Länge von 0,5 mm oder mehr.

Ein Querschnitt des zu prüfenden Volumens der Probe beträgt 1 mm$^2$ oder weniger. Dabei ist die Querschnittsfläche senkrecht zum Abstand zwischen den beiden Halteelementen gemessen.

Ein Aspekt der erfindungsgemäßen Messvorrichtung ist, dass sie eine Verstelleinheit aufweist, mit der in dem Betrieb der Messvorrichtung zumindest eine Zugkraft oder eine Druckkraft auf zumindest das erste oder das zweite Halteelement des Probenhalters ausübbar ist, sodass die Probe in dem Betrieb der Messvorrichtung einer gezielten Belastung ausgesetzt werden kann.

In einer Ausführungsform der Erfindung ist die Verstelleinheit manuell, d.h. von Hand, betätigbar. Beispielsweise wird das erste oder das zweite Halteelement auf einem Spindelantrieb montiert, sodass die beiden Halteelemente relativ zueinander bewegbar sind, wobei der Spindelantrieb mit einem Handrad antreibbar ist. In einer weiteren Ausführungsform ist die Verstelleinheit dadurch realisiert, dass die beiden Halteelemente des Probenhalters von einer konstanten, freihängenden Masse auseinandergezogen werden, sodass ein Kriechversuch realisiert ist. Da ein manueller Antrieb oder auch ein Schwerkraftantrieb der Verstelleinheit keine oder nur sehr geringe magnetische Störungen bewirken, könnte in einer solchen Ausführungsform die vollständige Verstelleinheit innerhalb des Abschirmgehäuses angeordnet sein.

In einer Ausführungsform der Erfindung umfasst die Verstelleinheit einen elektrisch angetriebenen Linearantrieb, wobei alle stromdurchflossenen Teile des Linearantriebs derart außerhalb des Probenraums angeordnet sind, dass das Abschirmgehäuse ein in dem Betrieb der Messvorrichtung von den stromdurchflossenen Teilen ausgehendes magnetisches Feld abschirmt. Ein elektrisch angetriebener Linearantrieb der Verstelleinheit weist insbesondere den Vorteil auf, dass die Probe einer sich zyklisch wiederholenden Belastung unterzogen werden kann.

In einer Ausführungsform der Erfindung ist der elektrisch angetriebene Linearantrieb ein elektromechanischer Linearantrieb, insbesondere ein Linearmotor mit einem elektrodynamischen Wirkprinzip oder ein Linearaktor mit einem piezoelektrischen oder einem elektrostatischen Wirkprinzip. Linearaktoren weisen im Gegensatz zu Linearmotoren mit elektrodynamischen Wirkprinzip oder drehenden Elektromotoren den Vorteil auf, dass sie vergleichsweise geringe magnetische Felder erzeugen, welche das Magnetometer der Messvorrichtung beeinflussen könnten.

Um einen Einfluss auf die mit der Messvorrichtung durchgeführten Messungen zu reduzieren, ist in einer Ausführungsform der Erfindung das Material zumindest für das erste Halteelement oder für das zweite Halteelement optimiert. In einer Ausführungsform der Erfindung umfasst zumindest das erste Halteelement oder das zweite Halteelement ein nichtmagnetisches Material oder besteht aus einem solchen. Als nichtmagnetisches Material kommen insbesondere Titan, eine Titanlegierung oder eine Keramik in Betracht.

In einer Ausführungsform der Erfindung ist das Material zumindest des ersten Halteelements oder des zweiten Halteelements so gewählt, dass es größere Streckgrenze aufweist als der Werkstoff der Probe. In einer Ausführungsform hat das Material zumindest des ersten Halteelements oder des zweiten Halteelements einer größere Zugfestigkeit als der Werkstoff der Probe.

In einer Ausführungsform der Erfindung umfasst zumindest das erste Halteelement oder das zweite Halteelement eine Führung, welche es ermöglicht, den Probenkopf einer Probe formschlüssig aufzunehmen. In einer weiteren Ausführungsform der Erfindung weist zumindest das erste Halteelement oder das zweite Halteelement zwei Teile auf, die mittels mindestens einer Schraube miteinander verbunden sind, sodass ein Probenkopf der Probe an dem jeweiligen Halteelement festklemmbar ist.

Will man die Verstelleinheit, insbesondere die stromdurchflossenen Teile der Verstelleinheit, außerhalb des Abschirmgehäuses anordnen, so bedarf es einer die Abschirmung möglichst wenig beeinflussenden Kraftübertragung aus der Umgebung des Abschirmgehäuses in den von dem Abschirmgehäuse definierten Probenraum. Daher ist in einer Ausführungsform der Erfindung das erste Halteelement über eine Tragestange aus einem nicht magnetischen und elektrisch isolierendem Material, insbesondere aus einer Keramik, mechanisch an die Verstelleinrichtung angekoppelt, wobei die Tragestange durch eine Durchbrechung in dem Abschirmgehäuse durch das Abschirmgehäuse hindurchgeführt ist.

In einer Ausführungsform der Erfindung weist auch eine solche Tragestange eine hinreichend hohe Steifigkeit auf, um die Kräfte von der Verstelleinrichtung auf das Halteelement zu übertragen. In einer Ausführungsform ist die Steifigkeit der Tragestange größer als die Steifigkeit des Werkstoffs der Probe. In einer Ausführungsform ist die Steifigkeit gleich 10.000 N/mm$^2$ oder größer.

Um definierte Messungen an einer mechanisch belasteten Probe durchführen zu können, ist es erforderlich, in der Verstelleinheit auf die Probe ausgeübte Kraft zu messen. Zu diesem Zweck umfasst die Messvorrichtung einen Kraftsensor. Als Kraftsensor kommen grundsätzlich alle aus dem Stand der Technik bekannten Typen von Kraftsensoren in Betracht, welche ein zu der Kraft proportionales elektrisches Messsignal ausgeben. Daher ist der Kraftsensor erfindungsgemäß außerhalb des Abschirmgehäuses angeordnet, um in dem Betrieb der Messvorrichtung ein von dem Kraftsensor ausgehendes magnetisches Feld abzuschirmen.

In einer Ausführungsform der Erfindung ist das zweite Halteelement über eine Tragestange aus einem nichtmagnetischen und elektrisch isolierenden Material, insbesondere einer Keramik, mechanisch an den Kraftsensor angekoppelt, wobei die Tragestange durch eine Durchbrechung in dem Abschirmgehäuse durch das Abschirmgehäuse hindurchgeführt ist.

Es versteht sich, dass in einer Ausführungsform der Erfindung auch die Tragestange, welche das zweite Halteelement an den Kraftsensor koppelt, eine hinreichend hohe Steifigkeit aufweist, um die Kräfte von dem Halteelement auf den Kraftsensor zu übertragen. In einer Ausführungsform ist die Steifigkeit der Tragestange größer als die Steifigkeit des Werkstoffs der Probe. In einer Ausführungsform ist die Steifigkeit gleich 10.000 N/mm$^2$ oder größer.

In einer Ausführungsform liegt die Frequenz der zyklischen mechanischen Belastung in einem Bereich von 10 Hz oder weniger. Typischerweise sollte die Bandbreite oder Abtastrate des Magnetometers um etwa eine Größenordnung größer sein als die Frequenz der zyklischen mechanischen Belastung. Das Magnetometer benötigt dann bei 10 Hz der zyklischen Belastung eine Bandbreite von mindestens 100 Hz. Bei Versuchen im elastischen Dehnungsbereich werden auch höhere Frequenzen, beispielsweise bis zu 50 kHz, der zyklischen mechanischen Belastung verwendet. In einer alternativen Ausführungsform kann die Bandbreite oder Abtastrate des Magnetometers auch in der Größenordnung der Frequenz der zyklischen mechanischen Belastung liegen oder darunter, wenn die Messung an ausgezeichneten Punkten der mechanischen Belastung, beispielsweise den Umkehrpunkten, gezielt ausgelöst (getriggert) wird.

Vorteilhaft ist es, wenn es die Messvorrichtung auch ermöglicht, Magnetisierungskurven mit einem angelegten, die Probe durchsetzenden magnetischen Umgebungsfeld H(t) zu messen. Zu diesem Zweck weist in einer Ausführungsform der Erfindung die Messvorrichtung zumindest eine mit einer elektrischen Stromquelle verbundene Spule auf, wobei die Spule derart in dem Probenraum angeordnet ist, dass in dem Betrieb der Messvorrichtung ein magnetisches Umgebungsfeld an die Probe anlegbar ist.

In einer Ausführungsform der Erfindung ist die elektrische Stromquelle derart außerhalb des Probenraumes angeordnet, dass das Abschirmgehäuse einen in dem Betrieb der Messvorrichtung von der Stromquelle ausgehendes magnetisches Feld abschirmt. In einer Ausführungsform der Erfindung ist die Stromquelle rauscharm.

Um beispielsweise die Hysterese von magnetomechanischen Kurven aus Magnetisierung M, mechanischer Spannung σ und Dehnung ε erfassen zu können, weist die Messvorrichtung in einer Ausführungsform der Erfindung weiterhin einen Dehnungssensor auf, wobei der Dehnungssensor derart ausgestaltet ist, dass in dem Betrieb der Messvorrichtung mit dem Dehnungssensor eine Längenänderung der Probe, d.h. insbesondere des zu prüfenden Volumens der Probe, zwischen den ersten und den zweiten Halteelementen erfassbar ist.

Dabei ist in einer Ausführungsform der Erfindung der Dehnungssensor derart außerhalb des Probenraums angeordnet, dass das Abschirmgehäuse ein in dem Betrieb der Messvorrichtung von dem Dehnungssensor ausgehendes magnetisches Feld abschirmt.

In einer Ausführungsform der Erfindung ist der Dehnungssensor ein berührungsloser Dehnungssensor, welcher nicht in Kontakt oder Eingriff mit der Probe steht, insbesondere ein optischer Dehnungssensor.

In einer Ausführungsform der Erfindung weist ein solcher optischer Dehnungssensor eine telezentrische Anordnung mit koaxialer Beleuchtung auf. Eine solche Anordnung ermöglicht es, die Öffnung in dem Abschirmgehäuse, durch welche die optische Strahlung des Dehnungssensors geführt wird, so klein wie möglich zu halten, weil die optischen Achsen von Beleuchtungs- und Abbildungsstrahlengang parallel und senkrecht zur Zugachse verlaufen.

Zumindest eine der zuvor genannten Aufgaben wird auch durch ein Verfahren zum Erfassen einer magnetischen Eigenschaft einer mechanisch belasteten Probe gelöst, wobei das Verfahren die Schritte aufweist:

A) Aufnehmen der Probe an den ersten und zweiten Halteelementen der Messvorrichtung nach einem der Ansprüche 1 bis 14,

B) Erfassen der magnetischen Flussdichte in der Umgebung der Probe mit dem Magnetometer,

C) mechanisches Belasten der Probe durch Ausüben einer Zugkraft oder einer Schubkraft mit der Verstelleinrichtung auf die Probe und

D) Bestimmen eine Änderung der magnetischen Flussdichte in der Umgebung der Probe vor und zumindest während oder nach dem mechanischen Belasten der Probe in Schritt C) als Maß für eine Ermüdung eines Werkstoffs der Probe,

wobei das Magnetometer ein supraleitendes Quanteninterferometer oder ein optisch gepumptes Magnetometer ist und

wobei ein Querschnitt des zu prüfenden Volumens der Probe 1 mm$^2$ oder weniger beträgt.

In einer Ausführungsform der Erfindung weist das Verfahren weiterhin den Schritt auf:

E) Ändern der magnetischen Feldstärke eines magnetischen Umgehungsfelds der Probe, sodass in Schritt B) die magnetische Flussdichte in der Umgebung der Probe in Abhängigkeit von der magnetischen Feldstärke des magnetischen Umgebungsfelds der Probe erfasst wird.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit gleichen Bezugszeichen bezeichnet.

Figur 1    ist eine schematische Querschnittsansicht einer Ausführungsform der erfindungsgemäßen Messvorrichtung.

Figur 2    zeigt Graphen der mit der Messvorrichtung aus Figur 1 messbaren zeitliche Verläufe des Umgebungsfeldes H, der magnetischen Flussdichte B, der Dehnung $\varepsilon = \Delta l / l_0$ sowie der mechanischen Spannung $\sigma$.

Figur 3    ist ein Ablaufdiagramm für eine Messung mit der Messvorrichtung aus Figur 1.

Figur 4    zeigt zwei Graphen magnetomechanischer Hysteresekurven eines mit der Messvorrichtung aus Figur 1 durchgeführten Kurzzeitfestigkeitsversuchs mit einer Probe aus ferritischem Stahl.

Figur 5i st eine schematische Querschnittsansicht einer weiteren Ausführungsform der erfindungsgemäßen Messvorrichtung im unbelasteten Zustand der Probe.

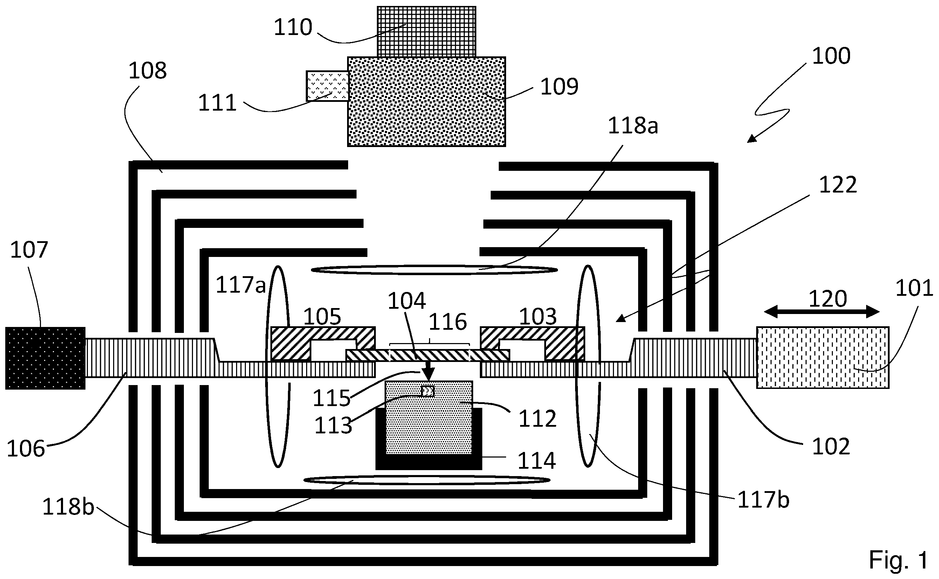

Figur 1 zeigt eine Ausführungsform einer Messvorrichtung 100 für die Werkstoffforschung, mit dem ein Ermüdungsprozess einer kleinen Probe 104 gezielt herbeigeführt und gleichzeitig anhand magnetomechanischer Kurven charakterisiert werden kann. Die Messvorrichtung 100 zum Durchführen eines solchen Mikrozugversuchs umfasst eine Kraftmessdose 107 als Kraft-sensor im Sinne der vorliegenden Anmeldung. Die Kraftmessdose 107 zur Messung einer an der Probe 104 zum Zeitpunkt *t* anliegenden Kraft **F**. Die Anordnung 100 umfasst ferner einen Linearaktor in Form eines Piezoweggebers 101 zur Verfahrung des rechten Probenendes um einen Weg s entlang einer Zugachse 120. Der Piezoweggeber 101 ermöglicht es, die Proben 104 zyklisch zu dehnen oder zu stauchen. Der Piezoweggeber 101 zeichnet sich durch geringe Ströme und somit durch niedrige magnetische Streufelder aus. Durch zyklisches Verfahren des Weges s wird eine Ermüdung im Werkstoff ausgelöst. In Kombination mit einer schnellen Dehnungsmessung kann der Ermüdungsversuch auch dehnungsgeregelt im plastischen Bereich der Probe durchgeführt werden, z.B. nach ASTM E 606. Dazu werden die zeitlichen Verläufe der mechanischen Spannung $\sigma(t) = {F(t)}/{A}$ (*F(t)*: Kraft; **A**: Quer-

schnittsfläche der Probe senkrecht zur Kraft) und der Dehnungen $\varepsilon(t)$ aufgenommen und ausgewertet.

Die Dehnung kann entweder taktil über Miniatur-Dehnungsmessstreifen oder mechanische Extensometer gemessen werden, welche durch eine Öffnung hineinragen, oder wie in der dargestellten Ausführungsform berührungslos mittels eines optischen Dehnungssensors 109, 110, 111. Der Dehnungssensor umfasst eine Optik 109, eine Kamera 110 und eine LED-Beleuchtung 111 und misst die aufgrund der auf die Probe 104 ausgeübten Kraft eintretende Längenänderung $\Delta l$ der Probe auf einer Basislänge $l_0$.

Der zyklische Zug auf die Probe 104 wird von dem Piezoweggeber 101 durch einen Laststrang mit einer steifen, elektrisch hoch resistiven, nicht-magnetischen Keramik in Form einer Tragestange 102 in Kombination mit einer Klemme 103 als Halteelement aus einer hochfesten unmagnetischen Titanlegierung auf die Probe 104 übertragen. Auf der Seite der Kraftmessdose 107 wiederum wird die auf die Probe 104 einwirkende Kraft über eine Klemme 105 als Halteelement aus einer hochfesten unmagnetischen Titanlegierung auf einen Laststrang mit einer steifen, elektrisch hoch resistiven, nicht-magnetischen Keramik in Form einer Tragestange 106 und von dieser in die Kraftmessdose 107 geleitet.

Die Steifigkeit des gesamten Probenhalters 122 mit aktorseitiger Tragestange 102, aktorseitiger Klemme 103 für die Probe 104, kraftmessdosenseitige Klemme 105 für die Probe 104 und kraftmessdosenseitige Tragestange 106 ist signifikant größer als die der Probe 104. Gleichzeitig müssen die dem Probehalter 122 ausgehenden Störfelder, insbesondere die von ihr durch die Bewegung erzeugten Änderungen der Flussdichte B an dem Magnetometer 112 kleiner sein als die von der Probe 104 ausgehende magnetische Flussdichte B. Viele zu prüfende Werkstoffe, wie Stähle, sind hochfest und ferromagnetisch, weisen also eine sehr hohe magnetische Permeabilität auf. Für die Probenhalterung werden daher unmagnetische para- oder diamagnetische Werkstoffe mit einer hohen Streckgrenze sowie - zur Vermeidung von Ausgleichssströmen - mit einer niedrigen elektrischen Leitfähigkeit verwendet.

Die Klemmen 103, 105 und die Tragestangen 102, 106 ermöglichen es, die Kraftmessdose 107 und den Piezoweggeber 101 außerhalb des Abschirmgehäuses 108 zu montieren und die resultierenden Störungen mittels Schirmung und eines großen Abstands zu minimieren.

Der Zugversuch wird innerhalb eines vierlagigen Abschirmgehäuses 108 durchgeführt und der Ermüdungsprozess wird mit einem optisch gepumpten Magnetometer (OPM) 112 charakterisiert.

Die magnetische Schirmung durch das Abschirmgehäuse 108 dient dazu, externe Felder soweit zu reduzieren, dass die in dem von dem Abschirmgehäuse 108 definierten Probenraum 121 verbleibenden Störfelder $H_s(t)$ im Bereich der Empfindlichkeit des OPM, also etwa in einem Bereich von 0.01 bis $10\ \mathrm{pT}/\sqrt{Hz}$ liegen. Bei einer Messrate des hier verwendeten OPM von 100 Hz sind das 0.1 bis 100 pT - also etwa sechs Größenordnungen unterhalb des Erdmagnetfeldes von 30 $\mu$T. Damit ist es möglich, auch an sehr kleinen Probenvolumen die Änderung der Magnetisierung $M(t, \varepsilon, \sigma)$ in Abhängigkeit von der angelegten mechanischen Spannung $\sigma$, der Dehnung $\varepsilon$ und der Anzahl der zyklischen Belastungen zu messen. Um den Einfluss der von diesen Elementen ausgehenden magnetischen Streufelder auf die Messung soweit wie möglich zu reduzieren, sind der Piezoweggeber 101, die Kraftmessdose 107 und der Dehnungssensor 109, 110, 111 außerhalb des Abschirmgehäuses angeordnet.

Diese Messvorrichtung dient der mechanomagnetischen Charakterisierung kleiner Proben 104. Dabei ist die Probe 104 eine bearbeitete Probe mit einer Versuchslänge 116, d.h. einem Abschnitt, der das eigentliche zu prüfende Volumen der Probe bildet, und mit zwei Probenköpfen an gegenüberliegenden Enden der Versuchslänge 116. Die Probe 104 ist so geformt, dass der wesentliche Teil der Schädigung im Ermüdungsbereich 116 auftritt. Der Ermüdungsbereich ist dadurch gekennzeichnet, dass hier die höchsten Spannungen und Dehnungen auftreten und dass die Probe am Versuchsende in diesem Bereich versagt. Die Probenköpfe auf beiden Seiten der Versuchslänge 116 sind so ausgestaltet, dass sie mit Hilfe der Klemmen 103, 105, mit den Tragestangen 102, 106 und damit mit dem Probenhalter verbindbar ist.

Die Versuchslänge 116 der Probe 104, d.h. die Länge des zu prüfenden Volumens der Probe 104, in der Richtung 120 der Zugsachse, beträgt 4 mm in der gezeigten Kombination aus Messvorrichtung 100 und Probe 104. Die Probe 104 hat über die gesamte Versuchslänge 116 hinweg eine Querschnittsfläche senkrecht zu der Zugsachse 120 von 0,8 mm$^2$.

Das OPM ist durch eine Sensorhalterung 114 an dem Abschirmgehäuse 108 befestigt und enthält eine Alkaligaszelle 113, welche die sensitive Region definiert. Die Ausrichtung des OPM ist so gewählt, dass Änderungen der Magnetisierung M im gesamten Versuchslänge 116 der Probe erfasst werden. Für Schädigungsmessungen an ferromagnetischen Werkstoffen wird mit höchster Priorität die B-Feld-Komponente 115 senkrecht zu der Oberfläche der Probe gemessen, da die Feldkomponenten aus dem Inneren der Probe aufgrund der hohen Permeabilität des Werkstoffes zum Lot hin gebrochen werden.

Die zweitwichtigste Komponente des B-Felds ist diejenige parallel zur Zugachse 120, da eine mechanische Belastung der Probe 104 unter Zugbelastung die magnetischen Momente m der magnetischen Domänen in dem Werkstoff bevorzugt parallel zur Zugachse 120 ausrichtet, während sie unter Druckbelastung senkrecht zur Druckachse gedreht werden.

Weiterhin sind in das Abschirmungsgehäuse 108 drei Helmholzspulenpaare integriert, um im Bereich von Probe 104 und Magnetometer 112 möglichst homogene Felder in allen drei Raumrichtungen X (Spulenpaar 117a, 117b), Y (Achse von Alkalimesszelle 113 zur Optik 109 des Dehnungssensors, Spulenpaar 118a, 118b) sowie entlang der Symmetrieachse Z des Abschirmgehäuses 108 (nicht gezeigt) ein äußeres Feld H anlegen zu können.

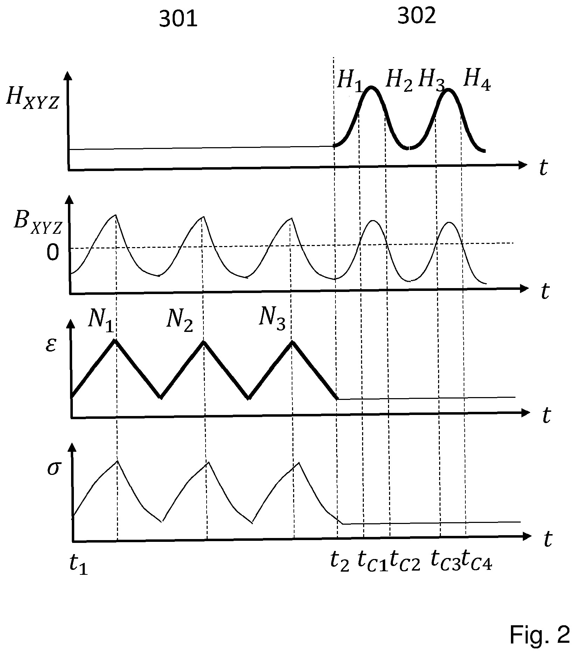

Figur 2 zeigt mit dieser Vorrichtung erzeugbare zeitliche Verläufe des Umgebungsfeldes H (wahlweise in einer der Raumrichtungen X, Y, Z), der gemessenen magnetischen Flussdichte **B** (vorzugsweise in Richtung des Vektors 115 senkrecht zu der Oberfläche der Probe 104), welche sich aus der Magnetisierung M der Probe sowie aus dem Umgebungsfeld H zusammensetzt, der Dehnung $\varepsilon = \Delta l / l_0$ gemessen als Längenänderung $\Delta l$ in Belastungsrichtung 120 der Probe 104 über eine Messlänge $l_0$ sowie der mechanischen Spannung $\sigma = F/A$, die aus der in Belastungsrichtung 120 anliegenden Kraft F und dem Probenquerschnitt $A$ berechnet wird. Die magnetische Flussdichte B wird vorzugsweise in Richtung des Normalenvektors 115 gemessen, es können aber alternativ auch andere Raumrichtungen oder mit einem skalaren Magnetometer der Betrag der magnetischen Flussdichte gemessen werden.

Im Bereich der magnetomechanischen Kurven 301 sind drei aufeinanderfolgende Zyklen $N_1$ bis $N_3$ aufgetragen. Hier werden die angelegten Magnetfelder H in allen drei Raumrichtungen konstant gehalten, während Spannung und Dehnung zyklisch variiert werden. Hieraus ergibt sich ein zyklischer Verlauf der magnetischen Flussdichte B am Sensor. Dargestellt ist hier ein dehnungsgeregelter Ermüdungsversuch mit dreiecksförmigem Dehnungsverlauf, wie er in sogenannten Kurzzeitfestigkeitsversuchen mit plastischer Verformung ("Low Cycle Fatigue", LCF, beschrieben in ASTM E 606) üblich ist. Im Bereich der Langzeitfestigkeit ("High Cycle Fatigue") mit rein elastischer Verformung wird die Spannung geregelt, was ebenfalls zu zyklischen Signalen in Dehnung und magnetischer Flussdichte führt. Bei diesen Versuchen wird die Lebensdauer der Probe in Zyklen angegeben, die sie bis zu ihrem Versagen aushält.

Im Bereich der magnetischen Kurven 302 werden dagegen Spannung und Dehnung konstant gehalten und das äußere Feld H in mindestens einer Raumrichtung X, Y oder Z zyklisch variiert. Dies führt ebenfalls zu einer Verschiebung der Blochwände und somit bei Defekten zu irreversiblen Wechselwirkungen durch Pinning. Charakteristische Schädigungsmerkmale in magnetischen Zyklen sind insbesondere die Koerzitivfeldstärken $H_1$ bis $H_4$ an den Nulldurchgängen $t_{C1}$ bis $t_{C4}$ der magnetischen Flussdichte B. In Figur 2 wird die Feldstärke H mit konstanter Amplitude variiert, was zu einer bestmöglichen Vergleichbarkeit der Koerzitivfeldstärken über den Ermüdungsversuch hinweg führt.

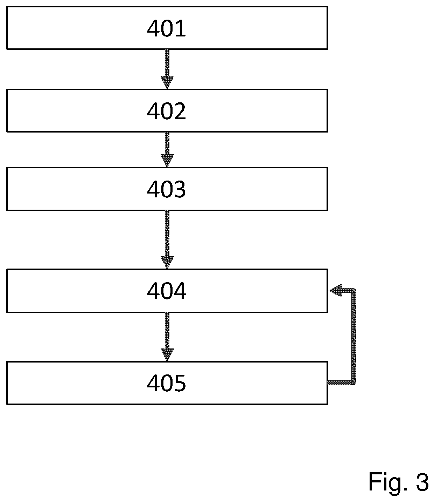

Figur 3 skizziert einen möglichen Messablauf, bei dem eine Probe in Schritt 401 vor oder nach dem Einbau in die Messvorrichtung durch magnetische Kurven, ähnlich denen in 302, aber mit abfallender Amplitude entmagnetisiert wird. Nachfolgend wird zur Bestimmung der Anfangsmagnetisierung M der Probe 104 im Schritt 402 eine Messung die magnetische Flussdichte B ohne und im Schritt 403 mit Probe gemessen. Zusammen mit dem Abstand zwischen Alkalizelle 113 und Probe 104 und aus dem Volumen der Probe gewichtet mit der Empfindlichkeitscharakteristik des OPM ergibt sich daraus ein mittleres magnetisches Moment $\vec{M}(t)$ der Probe. Anschließend wird die Probe eingebaut und durch Anlegen eines äußeren Feldes H bei gleichzeitiger Messung der magnetischen Flussdichte B die sogenannte magnetische Neukurve der noch nicht ermüdeten Probe zur Erzeugung einer gezielten Magnetisierungszustandes sowie als Vergleichsgröße für die spätere Änderung der Magnetisierung aufgenommen wird. Daran schließen sich abwechselnd in 404 $N$ magnetomechanische Zyklen 301 zur Ermüdung des Werkstoffes und optional in Schritt 405 die Aufnahme magnetischer Zyklen 302 an, bei denen insbesondere die Koerzitivfeldstärke $H_C(\sigma, \varepsilon, N)$ am Nulldurchgang der magnetischen Flussdichte B bestimmt wird.

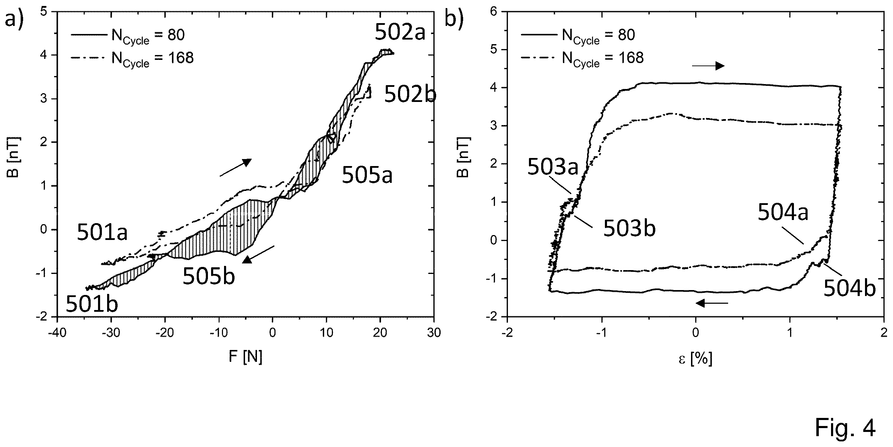

Figur 4 zeigt Beispiele magnetomechanischer Hysteresekurven eines Kurzzeitfestigkeitsversuchs, bei dem die Probe aus ferritischem Stahl eine Lebensdauer von etwa $N_{tot}$= 180 magnetomechanischen Ermüdungszyklen hat. Aufgetragen sind jeweils die Variation der magnetischen Flussdichte B mit der anliegenden Kraft F in Figur 4a und der Dehnung $\varepsilon$ in Figur 4b für die magnetomechanischen Zyklen $N_{Cycle}$= 80, was nach dem herkömmlichen Ansatz von Palmgren-Miner einer Schädigung $D = N_{Cycle}/N_{tot}$ von ca. 45 % entspricht, sowie für Zyklus $N_{Cycle}$= 168, also bei einer Schädigung von ca. 93 %. Mögliche charakteristische Schädigungsmerkmale können z.B. die Verlagerung der unteren und oberen Wendepunkte 501 a,b bzw. 502 a,b, die Veränderung der durch irreversible Wechselwirkungen wie das Pinning 205 hervorgerufenen Hystereseflächen 505a unter Zug sowie 505b unter Druck in der B(F)-Kurve oder auch die charakteristischen Punkte 503 a, b im steigenden und 504 a,b im fallenden Teil der B($\varepsilon$)-Kurve dienen. Die Punkte 503 und 504 sind vermutlich die Punkte, an denen eine Umorientierung der magnetischen Domänen stattfindet. Auch die Fläche unter den B($\varepsilon$)-Kurven kann als charakteristisches Schädigungsmerkmal verwendet werden, wobei die elastischen und die plastischen Anteile möglicherweise getrennt betrachtet werden müssen. Auch die Steigung der sogenannte anhysteretischen B(F)-Kurve, bei der die schraffierte Fläche beispielsweise durch Mittelung eliminiert wurde, in den Bereichen mit F > 0 und F < 0 kann als charakteristisches Schädigungsmerkmal herangezogen werden. Diese Kenngrößen können mit Kennwerten, die aus der Energiedichte w aus Gleichung (3) abgeleitet wurden, normiert werden.

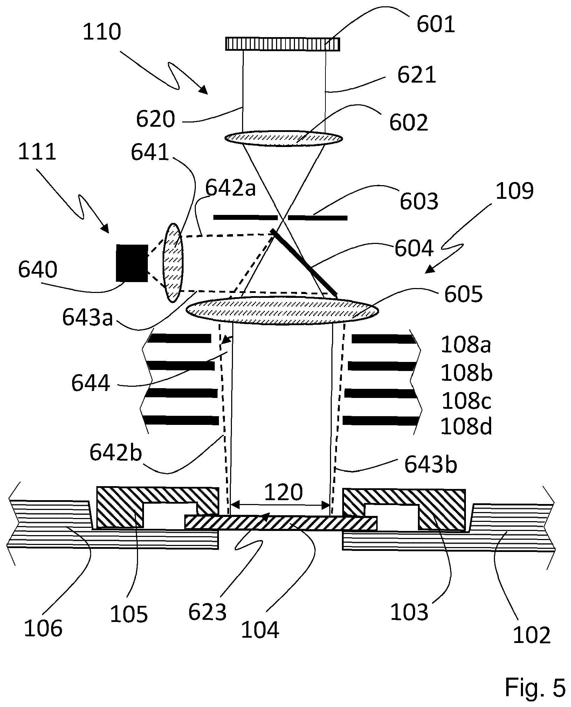

Figur 5 zeigt den Abbildungsstrahlengang der berührungslosen optischen Dehnungsmessung im unbelasteten Zustand. Die Dehnungsmessung erfolgt mittels Korrelation von Teilbildern am Probenrand über die Ähnlichkeit der Bilder auf dem Sensor 601 der Kamera 110. Die Linsen 602 und 605 bilden zusammen mit der Blende 603 eine telezentrische Optik 109, welche das Bildfeld 623 in der Versuchslänge der Probe 104 über die Randstrahlen 620, 621 auf den Sensor 601 der Kamera 110 abbilden. Bedingt durch die Öffnung der Blende 603 ergibt sich ein Halbwinkel der sogenannten numerischen Apertur der Optik, der die Lichtstärke der Optik bestimmt. Die Probe 104 ist über die Klemmen 103, 105 und die Tragestangen 102, 106 mit dem Piezoweggeber 101 bzw. mit der Kraftmessdose 107 verbunden. Die Öffnungen in den Lagen 108a-d des Abschirmghäuses 108 sind an die Randstrahlen der numerischen Apertur angepasst, um einerseits Reflexe wie etwa an den Klemmen 103, 105 zu vermeiden und andererseits die Öffnungen und somit die Reduktion des Schirmfaktors durch die Öffnungen möglichst klein zu halten.

Die in Figur 5 gezeigte LED-Beleuchtung 111 ist als konvergente Beleuchtung ausgeführt, die über den teildurchlässigen Spiegel 604 das Licht einer LED 640 über eine Optik 641 mit einem konvergenten Winkel 644 auf die Probe 104 lenkt, so dass das gesamte Bildfeld 623 ausgeleuchtet wird, ohne Reflexe durch Streiflicht der Randstrahlen 642 a,b und 643 a,b an dem Abschirmgehäuse 108 zu erzeugen. Durch die konvergente Beleuchtung werden auch Reflexe an senkrechten Wänden wie den Klemmvorrichtungen und somit Doppelbilder vermieden. Bei nicht-konvergenten Abbildungs- oder Beleuchtungsstrahlengängen kommt es durch solche Reflexe zu die Korrelation störenden Doppelbildern im Abbildungsstrahlengang.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

**Bezugszeichen**

| | |
|---|---|
| 100 | Messvorrichtung |
| 101 | Piezoweggeber, Bewegungsrichtung entlang einer Zugachse 120 |
| 102 | aktorseitige Tragestange |
| 103 | aktorseitige Klemme für die Probe 104 |
| 104 | Probe (Probenköpfe enden bei den weißen Linien) |
| 105 | kraftmessdosenseitige Klemme für die Probe 104 |
| 106 | kraftmessdosenseitige Tragestange |
| 107 | Kraftmessdose |
| 108 | vierlagiges Abschirmgehäuse |
| 108a-d | Lagen des Abschirmgehäuses 108 |
| 109 | Dehnungssensor - Objektiv |
| 110 | Dehnungssensor - Kamera |
| 111 | Dehnungssensor - Lichtquelle |
| 112 | Magnetometer (OPM) |
| 113 | Alkalizelle |
| 114 | Sensorhalterung |
| 115 | Komponente der mag. Flussdichte senkrecht zur Oberfläche der Probe 104 |
| 116 | Versuchlänge der Probe 104 |
| 117a, 117b | Helmholtzspulenpaar für Zugachse |
| 118a, 118b | Helmholtzspulenpaar für vertikale Achse |
| 120 | Zugachse |
| 121 | Probenraum |
| 122 | Probenhalter |
| 501a, 501b | untere Wendepunkte bei verschiedenen Zyklenzahlen $N_{Cycle}$ |
| 502a, 502b | obere Wendepunkte bei verschiedenen Zyklenzahlen $N_{Cycle}$ |
| 503a, 503b | charakteristische Punkte steigend |
| 504a, 504b | charakteristische Punkte fallend |

505a, 505b    Fläche der Hysterese als Maß für irreversible Wechselwirkung

| 601 | Sensor der Kamera 110 |
|---|---|
| 602 | Kameraseitige Linse der telezentrischen Optik |
| 603 | Blende der telezentrischen Optik |
| 604 | Teildurchlässiger Spiegel für Beleuchtung |
| 605 | Probenseitige Linse der telezentrischen Optik |
| 620, 621 | Randstrahlen der Optik 109 |
| 623 | Bildfeld |
| 640 | LED |
| 641 | Optik für LED |
| 642a,b, | Randstrahlen der LED-Ausleuchtung |
| 643a,b | Randstrahlen der LED-Ausleuchtung |
| 644 | Winkel |

**Patentansprüche**

1.  Messvorrichtung (100) zum Erfassen einer magnetischen Eigenschaft einer mechanisch belasteten Probe (104) mit

    einer Probe (104)
    einem Probenhalter (122),

       wobei der Probenhalter (122) ein erstes Halteelement (103, 105) und ein zweites Halteelement (103, 105) aufweist,
       wobei das erste und das zweite Halteelement (103, 105) derart ausgestaltet und voneinander beabstandet angeordnet sind, dass die Probe (104) an dem ersten und dem zweiten Halteelement (103, 105) aufgenommen ist, so dass sich die Probe (104) zwischen dem ersten und dem zweiten Halteelement (103, 105) erstreckt,

    einer mechanisch zumindest mit dem ersten oder dem zweiten Halteelement (103, 105) verbundenen Verstelleinheit (101),
    wobei die Verstelleinheit (101) derart ausgestaltet und angeordnet ist, dass sie in einem Betrieb der Messvorrichtung (100) zumindest eine Zugkraft oder eine Druckkraft auf zumindest das erste oder das zweite Halteelement (103, 105) ausübt,
    und
    einem Magnetometer (112),
    wobei das Magnetometer (112) derart ausgestaltet und angeordnet ist, dass in dem Betrieb der Messvorrichtung (100) mit dem Magnetometer (112) eine magnetische Flussdichte in der Umgebung der Probe (104) innerhalb des Probenraums (121) erfassbar ist, und
    einem einen Probenraum (121) definierenden Abschirmgehäuse (108),
    wobei das Abschirmgehäuse (108) derart ausgestaltet ist, dass es eine magnetische Abschirmung des Probenraums (121) gegenüber einem außerhalb des Probenraums (121) vorhanden magnetischen Feld bereitstellt,

    **dadurch gekennzeichnet, dass**

       das erste und das zweite Halteelement (103, 105) innerhalb des Probenraums angeordnet sind, so dass die Probe (104) innerhalb des Probenraums (121) aufnehmbar ist,
       die Messvorrichtung (100) weiterhin einem Kraftsensor (107) aufweist,
       wobei der Kraftsensor (107) derart ausgestaltet ist, dass in dem Betrieb der Messvorrichtung (100) mit dem Kraftsensor (107) eine von der Verstelleinheit (101) auf die Probe (104) ausgeübte Kraft erfassbar ist, und wobei der Kraftsensor (107) derart außerhalb des Probenraums (121) angeordnet ist, dass das Abschirmgehäuse ein in dem Betrieb der Messvorrichtung (100) von dem Kraftsensor (107) ausgehendes magnetisches Feld abschirmt, das Magnetometer (112) ein supraleitendes Quanteninterferometer oder ein optisch gepumptes Magnetometer ist und
       ein Querschnitt des zu prüfenden Volumens der Probe (104) 1 mm$^2$ oder weniger beträgt.

2.  Messvorrichtung (100) nach dem vorhergehenden Anspruch mit der Probe, wobei eine Länge eines zu prüfenden Volumens (116) der Probe (104) in einer Richtung einer Zugachse (120) der Verstelleinheit (101) 5 mm oder weniger, vorzugsweise 4 mm oder weniger und besonders bevorzugt 3 mm oder weniger beträgt.

3. Messvorrichtung (100) nach einem der vorhergehenden Ansprüche mit der Probe, wobei ein Abstand zwischen einem sensitiven Bereich des Magnetometers (112) und einer Oberfläche eines zu prüfenden Volumens (116) der Probe (104) gleich der halben Länge eines zu prüfenden Volumens der Probe in einer Richtung einer Zugachse (120) der Verstelleinheit (101) oder größer ist.

4. Messvorrichtung (100) nach einem der vorhergehenden Ansprüche, wobei das Magnetometer (112) ein bei Raumtemperatur betreibbares Magnetometer ist.

5. Messvorrichtung (100) nach einem der vorhergehenden Ansprüche, wobei die Verstelleinheit einen elektrisch angetriebenen Linearantrieb, insbesondere einen elektromechanischen Linearantrieb, umfasst, wobei alle stromdurchflossenen Teile des Linearantriebs derart außerhalb des Probenraums (121) angeordnet sind, dass das Abschirmgehäuse ein in dem Betrieb der Messvorrichtung (100) von den stromdurchflossenen Teilen ausgehendes magnetisches Feld abschirmt.

6. Messvorrichtung (100) nach einem der vorhergehenden Ansprüche, wobei zumindest das erste Halteelement (103, 105) oder das zweite Halteelement (103, 105) ein nichtmagnetisches Material, vorzugsweise Titan, eine Titanlegierung oder eine Keramik, umfasst oder aus diesem besteht.

7. Messvorrichtung (100) nach einem der vorhergehenden Ansprüche, wobei das erste Halteelement (103) über eine Tragestange (102) aus einem nicht-magnetischen und elektrisch isolierendem Material, insbesondere aus einer Keramik, mechanisch an die Verstelleinrichtung (101) angekoppelt ist und wobei die Tragestange (102) durch eine Durchbrechung in dem Abschirmgehäuse (108) durch das Abschirmgehäuse (108) hindurchgeführt ist.

8. Messvorrichtung (100) nach einem der vorhergehenden Ansprüche, wobei das zweite Halteelement (105) über eine Tragestange (106) aus einem nicht-magnetischen und elektrisch isolierenden Material, insbesondere einer Keramik, mechanisch an den Kraftsensor (107) angekoppelt ist und wobei die Tragestange (106) durch eine Durchbrechung in dem Abschirmgehäuse (108) durch das Abschirmgehäuse (108) hindurchgeführt ist.

9. Messvorrichtung (100) nach einem der vorhergehenden Ansprüche, wobei die Messvorrichtung einen Dehnungssensor (109, 110, 111) aufweist,
wobei der Dehnungssensor (109, 110, 111) derart ausgestaltet ist, dass in dem Betrieb der Messvorrichtung mit dem Dehnungssensor (109, 110, 111) eine Längenänderung der Probe (104) zwischen den ersten und zweiten Halteelementen (102, 105) erfassbar ist.

10. Messvorrichtung (100) nach einem der vorhergehenden Ansprüche, wobei der Dehnungssensor (109, 110, 111) derart außerhalb des Probenraums (121) angeordnet ist, dass das Abschirmgehäuse ein in dem Betrieb der Messvorrichtung (100) von dem Dehnungssensor (109, 110, 111) ausgehendes magnetisches Feld abschirmt und wobei der Dehnungssensor vorzugsweise ein berührungsloser Dehnungssensor (109, 110, 111), insbesondere ein optischer Dehnungssensor (109, 110, 111), ist.

11. Messvorrichtung (100) nach einem der vorhergehenden Ansprüche, wobei das Abschirmgehäuse (108) einen Schirmfaktor von 1.000 oder mehr, vorzugsweise von 3.000 oder mehr, und besonders bevorzugt von 8.000 oder mehr aufweist.

12. Messvorrichtung (100) nach einem der vorhergehenden Ansprüche, wobei die Messvorrichtung (100) zumindest eine mit einer elektrischen Stromquelle verbundene Spule (117a, 117b, 118a, 118b) aufweist, wobei die Spule (117a, 117b, 118a, 118b) derart in dem Probenraum (121) angeordnet ist, dass in dem Betrieb der Messvorrichtung (100) ein magnetisches Umgebungsfeld an die Probe (104) anlegbar ist.

13. Verfahren zum Erfassen einer magnetischen Eigenschaft einer mechanisch belasteten Probe (104) mit den Schritten

    A) Aufnehmen der Probe (104) an den ersten und zweiten Halteelementen (102, 105) der Messvorrichtung (100) nach einem der Ansprüche 1 bis 12,
    B) Erfassen der magnetischen Flussdichte in der Umgebung der Probe (104) mit dem Magnetometer (112),
    C) mechanisches Belasten der Probe (104) durch Ausüben einer Zugkraft oder einer Schubkraft mit der Verstelleinrichtung (101) auf die Probe (104) und

D) Bestimmen einer Änderung der magnetischen Flussdichte in der Umgebung der Probe (104) vor und zumindest während oder nach dem mechanischen Belasten der Probe (104) in Schritt C) als Maß für eine Ermüdung eines Werkstoffs der Probe

**dadurch gekennzeichnet, dass**

das Magnetometer (112) ein supraleitendes Quanteninterferometer oder ein optisch gepumptes Magnetometer ist und
ein Querschnitt des zu prüfenden Volumens der Probe (104) 1 mm$^2$ oder weniger beträgt.

14. Verfahren nach Anspruch 13, wobei das Verfahren weiterhin den Schritt aufweist
E) Ändern der magnetischen Feldstärke eines magnetischen Umgebungsfelds der Probe, so dass in Schritt B) die magnetische Flussdichte in der Umgebung der Probe (104) in Abhängigkeit von der magnetischen Feldstärke des magnetischen Umgebungsfelds der Probe (104) erfasst wird.


**Claims**

1. A measuring device (100) for detecting a magnetic property of a mechanically loaded sample (104), comprising

a sample (104)
a sample holder (122),

wherein the sample holder (122) comprises a first holding element (103, 105) and a second holding element (103, 105),
wherein the first and second holding elements (103, 105) are configured and arranged at a distance from one another such that the sample (104) is held by the first and second holding elements (103, 105) such that the sample (104) extends between the first and second holding elements (103, 105),

an adjustment unit (101) mechanically connected at least to the first or second holding element (103, 105), wherein the adjustment unit (101) is configured and positioned such that, during operation of the measuring device (100), it exerts at least a tensile force or a compressive force on at least the first or the second holding element (103, 105), and
a magnetometer (112),
wherein the magnetometer (112) is configured and arranged such that, during operation of the measuring device (100), a magnetic flux density in the vicinity of the sample (104) within the sample chamber (121) is detectable by the magnetometer (112), and
a shielding housing (108) defining a sample chamber (121),
wherein the shielding housing (108) is configured such that it provides magnetic shielding of the sample chamber (121) against a magnetic field present outside the sample chamber (121),

**characterised in that**

the first and second holding elements (103, 105) are arranged within the sample chamber such that the sample (104) can be accommodated within the sample chamber (121),
the measuring device (100) further comprises a force sensor (107),

wherein the force sensor (107) is configured such that, during operation of the measuring device (100) with the force sensor (107), a force exerted by the adjustment unit (101) on the sample (104) is detectable, and
wherein the force sensor (107) is positioned outside the sample chamber (121) in such a way that the shielding housing shields a magnetic field emanating from the force sensor (107) during operation of the measuring device (100),

the magnetometer (112) is a superconducting quantum interferometer or an optically pumped magnetometer, and
a cross-sectional area of the volume of the sample (104) to be tested is 1 mm$^2$ or less.

2. The measuring device (100) according to the previous claim, comprising the sample, wherein a length of a volume (116) of the sample (104) to be tested in the direction of a tensile axis (120) of the adjustment unit (101) is 5 mm or less, preferably 4 mm or less, and more preferably 3 mm or less.

3. The measuring device (100) according to any one of the previous claims, comprising the sample, wherein a distance between a sensitive region of the magnetometer (112) and a surface of a volume (116) of the sample (104) to be tested is equal to half the length of a volume of the sample to be tested in the direction of a tensile axis (120) of the adjustment unit (101).

4. The measuring device (100) according to any one of the previous claims, wherein the magnetometer (112) is a magnetometer operable at room temperature.

5. The measuring device (100) according to any one of the previous claims, wherein the adjustment unit comprises an electrically driven linear drive, in particular an electromechanical linear drive, wherein all current-carrying parts of the linear drive are arranged outside the sample chamber (121) such that the shielding housing shields a magnetic field emanating from the current-carrying parts during operation of the measuring device (100).

6. The measuring device (100) according to any one of the previous claims, wherein at least the first holding element (103, 105) or the second holding element (103, 105) comprises or consists of a non-magnetic material, preferably titanium, a titanium alloy or a ceramic.

7. The measuring device (100) according to any one of the previous claims, wherein the first holding element (103) is mechanically coupled to the adjustment mechanism (101) via a support rod (102) made of a non-magnetic and electrically insulating material, in particular a ceramic, and wherein the support rod (102) is passed through the shielding housing (108) via an opening in the shielding housing (108).

8. The measuring device (100) according to any one of the previous claims, wherein the second holding element (105) is mechanically coupled to the force sensor (107) via a support rod (106) made of a non-magnetic and electrically insulating material, in particular a ceramic, and wherein the support rod (106) is passed through the shielding housing (108) via an opening in the shielding housing (108).

9. The measuring device (100) according to any one of the previous claims, wherein the measuring device comprises a strain sensor (109, 110, 111),
wherein the strain sensor (109, 110, 111) is configured such that, during operation of the measuring device with the strain sensor (109, 110, 111), a change in length of the sample (104) between the first and second holding elements (102, 105) is detectable.

10. The measuring device (100) according to one of the previous claims, wherein the strain sensor (109, 110, 111) is positioned outside the sample chamber (121) in such a way that the shielding housing shields a magnetic field emitted by the strain sensor (109, 110, 111) during operation of the measuring device (100), and wherein the strain sensor is preferably a non-contact strain sensor (109, 110, 111), in particular an optical strain sensor (109, 110, 111).

11. The measuring device (100) according to one of the previous claims, wherein the shielding housing (108) has a shielding factor of 1,000 or more, preferably 3,000 or more, and most preferably 8,000 or more.

12. The measuring device (100) according to any one of the previous claims, wherein the measuring device (100) comprises at least one coil (117a, 117b, 118a, 118b) connected to an electrical power source, wherein the coil (117a, 117b, 118a, 118b) is arranged in the sample chamber (121) in such a way that, during operation of the measuring device (100), an ambient magnetic field can be applied to the sample (104).

13. A method for detecting a magnetic property of a mechanically loaded sample (104), comprising the steps

A) securing the sample (104) to the first and second holding elements (102, 105) of the measuring device (100) according to one of claims 1 to 12,
B) measuring the magnetic flux density in the vicinity of the sample (104) using the magnetometer (112),
C) mechanically loading the sample (104) by applying a tensile force or a compressive force to the sample (104) using the adjustment unit (101), and
D) determining a change in the magnetic flux density in the vicinity of the sample (104) before and at least during or after the mechanical loading of the sample (104) in step C) as a measure of fatigue of a material of the sample,

**characterised in that**

the magnetometer (112) is a superconducting quantum interferometer or an optically pumped magnetometer, and

a cross-sectional area of the volume of the sample (104) to be tested is 1 mm$^2$ or less.

14. The method according to claim 13, wherein the method further comprises the step of
E) varying the magnetic field strength of a magnetic ambient field of the sample, such that in step B) the magnetic flux density in the vicinity of the sample (104) is detected as a function of the magnetic field strength of the magnetic ambient field of the sample (104).

**Revendications**

1. Dispositif de mesure (100) destiné à détecter une propriété magnétique d'un échantillon (104) soumis à une contrainte mécanique avec

un échantillon (104)
un porte-échantillon (122),
dans lequel le porte-échantillon (122) présente un premier élément de maintien (103, 105) et un deuxième élément de maintien (103, 105),
dans lequel le premier et le deuxième élément de maintien (103, 105) sont configurés et sont espacés l'un de l'autre de telle manière que l'échantillon (104) est reçu sur le premier et le deuxième élément de maintien (103, 105) si bien que l'échantillon (104) s'étend entre le premier et le deuxième élément de maintien (103, 105),
une unité de réglage (101) reliée mécaniquement au moins au premier ou au deuxième élément de maintien (103, 105),
dans lequel l'unité de réglage (101) est configurée et disposée de manière à exercer au moins une force de traction ou une force de pression sur au moins le premier ou le deuxième élément de maintien (103, 105) lors d'un fonctionnement du dispositif de mesure (100),
et
un magnétomètre (112),
dans lequel le magnétomètre (112) est configuré et disposé de telle manière que lors du fonctionnement du dispositif de mesure (100) avec le magnétomètre (112), une densité de flux magnétique peut être détectée dans l'environnement de l'échantillon (104) à l'intérieur de l'espace d'échantillon (121), et
un boîtier de protection (108) définissant un espace d'échantillon (121),
dans lequel le boîtier de protection (108) est configuré de manière à fournir une protection magnétique de l'espace d'échantillon (121) par rapport à un champ magnétique présent à l'extérieur de l'espace d'échantillon (121),
**caractérisé en ce que**
le premier et le deuxième élément de maintien (103, 105) sont disposés à l'intérieur de l'espace d'échantillon de telle sorte que l'échantillon (104) peut être reçu à l'intérieur de l'espace d'échantillon (121),
le dispositif de mesure (100) présente par ailleurs un capteur de force (107),
dans lequel le capteur de force (107) est configuré de telle manière que lors du fonctionnement du dispositif de mesure (100) avec le capteur de force (107), une force exercée par l'unité de réglage (101) sur l'échantillon (104) peut être détectée, et dans lequel le capteur de force (107) est disposé à l'extérieur de l'espace d'échantillon (121) de telle manière que le boîtier de protection protège un champ magnétique émanant du capteur de force (107) lors du fonctionnement du dispositif de mesure (100),
le magnétomètre (112) est un interféromètre quantique supraconducteur ou un magnétomètre à pompage optique et
une section transversale du volume de l'échantillon (104) à tester est inférieure ou égale à 1 mm$^2$.

2. Dispositif de mesure (100) selon la revendication précédente avec l'échantillon, dans lequel une longueur d'un volume (116) à contrôler de l'échantillon (104) dans une direction d'un axe de traction (120) de l'unité de réglage (101) est inférieure ou égale à 5 mm, de préférence inférieure ou égale à 4 mm et de manière particulièrement préférée inférieure ou égale à 3 mm.

3. Dispositif de mesure (100) selon l'une quelconque des revendications précédentes avec l'échantillon, dans lequel une distance entre une zone sensible du magnétomètre (112) et une surface d'un volume (116) à contrôler de l'échantillon (104) est supérieure ou égale à la moitié de la longueur d'un volume de l'échantillon à contrôler dans une direction d'un axe de traction (120) de l'unité de réglage (101).

4. Dispositif de mesure (100) selon l'une quelconque des revendications précédentes, dans lequel le magnétomètre (112) est un magnétomètre pouvant fonctionner à température ambiante.

5. Dispositif de mesure (100) selon l'une quelconque des revendications précédentes, dans lequel l'unité de réglage comprend un entraînement linéaire à entraînement électrique, en particulier un entraînement linéaire électromécanique, dans lequel toutes les parties traversées par le courant de l'entraînement linéaire sont disposées à l'extérieur de l'espace d'échantillon (121) de telle manière que le boîtier de protection protège un champ magnétique émanant des parties traversées par le courant lors du fonctionnement du dispositif de mesure (100).

6. Dispositif de mesure (100) selon l'une quelconque des revendications précédentes, dans lequel au moins le premier élément de maintien (103, 105) ou le deuxième élément de maintien (103, 105) comprend ou est constitué d'un matériau non magnétique, de préférence de titane, d'un alliage de titane ou d'une céramique.

7. Dispositif de mesure (100) selon l'une quelconque des revendications précédentes, dans lequel le premier élément de maintien (103) est couplé mécaniquement à l'unité de réglage (101) par l'intermédiaire d'une barre de support (102) en un matériau non magnétique et électriquement isolant, en particulier en une céramique, et dans lequel la barre de support (102) est traversée par le boîtier de protection (108) à travers un ajour dans le boîtier de protection (108).

8. Dispositif de mesure (100) selon l'une quelconque des revendications précédentes, dans lequel le deuxième élément de maintien (105) est couplé mécaniquement au capteur de force (107) par l'intermédiaire d'une barre de support (106) en un matériau non magnétique et électriquement isolant, en particulier en une céramique, et dans lequel la barre de support (106) est traversée par le boîtier de protection (108) à travers un ajour dans le boîtier de protection (108).

9. Dispositif de mesure (100) selon l'une quelconque des revendications précédentes, dans lequel le dispositif de mesure présente un capteur d'allongement (109, 110, 111),
dans lequel le capteur d'allongement (109, 110, 111) est configuré de telle manière que lors du fonctionnement du dispositif de mesure avec le capteur d'allongement (109, 110, 111), une modification de longueur de l'échantillon (104) entre les premier et deuxième éléments de maintien (102, 105) peut être détectée

10. Dispositif de mesure (100) selon l'une quelconque des revendications précédentes, dans lequel le capteur d'allongement (109, 110, 111) est disposé de telle manière à l'extérieur de l'espace d'échantillon (121) que le boîtier de protection protège un champ magnétique émanant du capteur d'allongement (109, 110, 111) lors du fonctionnement du dispositif de mesure (100) et dans lequel le capteur d'allongement est de préférence un capteur d'allongement sans contact (109, 110, 111), en particulier un capteur d'allongement optique (109, 110, 111).

11. Dispositif de mesure (100) selon l'une quelconque des revendications précédentes, dans lequel le boîtier de protection (108) présente un facteur de blindage de 1 000 ou plus, de préférence de 3 000 ou plus, et de manière particulièrement préférée de 8 000 ou plus.

12. Dispositif de mesure (100) selon l'une quelconque des revendications précédentes, dans lequel le dispositif de mesure (100) présente au moins une bobine (117a, 117b, 118a, 118b) reliée à une source de courant électrique, dans lequel la bobine (117a, 117b, 118a, 118b) est disposée dans l'espace d'échantillon (121) de telle manière qu'un champ magnétique ambiant peut être appliqué sur l'échantillon (104) lors du fonctionnement du dispositif de mesure (100).

13. Procédé de détection d'une propriété magnétique d'un échantillon (104) soumis à une contrainte mécanique avec les étapes

A) de réception de l'échantillon (104) sur les premier et deuxième éléments de maintien (102, 105) du dispositif de mesure (100) selon l'une quelconque des revendications 1 à 12,
B) de détection de la densité de flux magnétique dans l'environnement de l'échantillon (104) avec le magnétomètre (112),
C) d'exposition de l'échantillon (104) à une contrainte mécanique en exerçant une force de traction ou une force de pression avec l'unité de réglage (101) sur l'échantillon (104) et

D) de détermination d'une modification de la densité de flux magnétique dans l'environnement de l'échantillon (104) avant et au moins pendant ou après l'exposition de l'échantillon (104) à une contrainte mécanique dans l'étape C) comme mesure d'une fatigue d'un matériau de l'échantillon

**caractérisé en ce que**

le magnétomètre (112) est un interféromètre quantique supraconducteur ou un magnétomètre à pompage optique et
une section transversale du volume de l'échantillon (104) à tester est inférieure ou égale à 1 mm$^2$.

14. Procédé selon la revendication 13, dans lequel le procédé présente par ailleurs l'étape
E) de modification de l'intensité de champ magnétique d'un champ magnétique ambiant de l'échantillon de telle sorte que dans l'étape B), la densité de flux magnétique dans l'environnement de l'échantillon (104) est détectée en fonction de l'intensité de champ magnétique du champ magnétique ambiant de l'échantillon (104).

Fig. 1

Fig. 2

Fig. 3

Fig. 4

EP 4 151 994 B1

Fig. 5

22

**IN DER BESCHREIBUNG AUFGEFÜHRTE DOKUMENTE**

**In der Beschreibung aufgeführte Patentdokumente**

- JP 2008268175 A

**In der Beschreibung aufgeführte Nicht-Patentliteratur**

- A novel phenomenological model for dynamic behavior of magnetorheological elastomers in tension-compression mode. **HOSSEIN VATANDOOST et al.** Smart Materials and structures. IOP Publishing Ltd., 02 May 2017, vol. 26, 65011